# EUROPEAN PATENT APPLICATION

(11) **EP 4 195 811 A1**
(43) Date of publication of application: **14.06.2023**
(21) Application number: 20948096.1
(22) Date of filing: 06.08.2020
(51) Int. Cl.: H04W 72/04, H04W 92/20, H04W 28/06

(54) **WIRELESS COMMUNICATION NODE**

(71) Applicant: NTT DOCOMO, INC., Tokyo 100-6150 (JP)
(72) Inventor: HARADA Hiroki, Tokyo 100-6150 (JP); KURITA Daisuke, Tokyo 100-6150 (JP); KUMAGAI Shinya, Tokyo 100-6150 (JP); SHIBAIKE Naoya, Tokyo 100-6150 (JP); OKANO Mayuko, Tokyo 100-6150 (JP); WANG Jing, Beijing 100190 (CN)
(74) Representative: Hoffmann Eitle
(86) International application number: PCT/JP2020/030243
(87) International publication number: WO 2022/029968

(57) **Abstract**

A radio communication node (100 B) transmits/receives a radio signal to/from an upper node via a first cell and transmits/receives a radio signal to/from a lower node via a second cell. When a second subcarrier spacing wider than a first subcarrier spacing is used in a second cell, a radio communication node (100 B) makes at least one of a minimum value or a maximum value of a candidate value that can be designated as a guard time unit applied to switching between transmission and reception in a first radio link configured via the first cell and a second radio link configured via the second cell larger than in a case that the first subcarrier spacing is used, when a second subcarrier spacing wider than the first subcarrier spacing is used in the second cell.

## Description

### [Technical Field]

The present disclosure relates to radio communication nodes that configure radio access and radio backhaul.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release 15 and Release 16 (NR) of the 3 GPP specify operation in a band that includes multiple frequency ranges, specifically, FR 1 (410 MHz to 7.125 GHz) and FR 2 (24.25 GHz to 52.6 GHz).

Release 17 of the 3 GPP is also considering NR beyond 52.6 GHz to 71 GHz (Non-Patent Literature 1). In addition, Beyond 5G, 5G Evolution, or 6 G (Release -18 and later) aims to support frequencies above 71 GHz.

In the frequency band of 52.6 ~ 71 GHz, support for a wider subcarrier spacing (SCS), for example, 960 kHz is being studied, in consideration of efficient coexistence by providing a channel bandwidth (approximately 2 GHz) equivalent to IEEE (Institute of Electrical and Electronics Engineers) 802.11 ad/ay, and reduction of the overhead of PTRS (Phase Tracking Reference Signal), which contributes to reduction of phase noise (Non-Patent Literature 2).

### [Citation List]

### [Non-Patent Literature]

Non-Patent Literature 1 "New WID on Extending current NR operation to 71 GHz", RP -193229, 3 GPP TSG RAN Meeting # 86, 3 GPP, December 2019
Non-Patent Literature 2 "RAN1 Chairman's Notes", 3GPP TSG R_AN WG1 Meeting # 101-e, e-Meeting, 3GPP, June 2020

### [Summary of Invention]

While a wide SCS such as 960 kHz is expected to have the effect described above, it is desirable to minimize the number of SCSs supported for the 52.6 ~ 71 GHz frequency band in consideration of implementation.

It is also assumed that Integrated Access and Backhaul (IAB), which integrates radio access to terminals (User Equipment, UE) and a radio backhaul between radio communication nodes such as a radio base station (gNB), will be operated in the 52.6 ~ 71 GHz frequency band.

However, if a wide SCS such as 960 kHz is supported in a high frequency band such as 52.6 ~ 71 GHz, there are some parts which are not necessarily appropriate in the current specification of 3 GPP for IAB.

For example, an IAB node has a Mobile Termination (MT) function for connecting to a parent node (which may be referred to as an IAB donor) and a Distributed Unit (DU) function for connecting to a child node or a UE. However, considering the wide SCS, there is room for improvement in the guard time unit (Specifically, the guard symbol) provided for switching between transmission/reception at the MT and transmission/reception at the DU.

Accordingly, the following disclosure has been made in view of this situation, and it is an object of the present invention to provide a radio communication node capable of realizing more appropriate IAB operation even when a wide SCS such as 960 kHz is supported in a high frequency band such as 52.6 ~ 71 GHz.

One aspect of the present disclosure is a radio communication node (radio communication node 100 B) including: a transmission/reception unit (radio signal transmission and reception unit 110) which transmits and receives a radio signal to and from an upper node via a first cell and a lower node via a second cell; and a control unit (control unit 170) that makes at least one of a minimum value or a maximum value of a candidate value that can be designated as a guard time unit applied to switching between transmission and reception in a first radio link configured via the first cell and a second radio link configured via the second cell larger than in a case that the first subcarrier spacing is used, when a second subcarrier spacing wider than the first subcarrier spacing is used in the second cell.

One aspect of the present disclosure is a radio communication node (radio communication node 100 B) including: a transmission/reception unit (radio signal transmission and reception unit 110) that transmits and receives a radio signal to and from an upper-level node via a first cell and a lowerlevel node via a second cell; and a control unit (170) that, even when a second subcarrier spacing that is wider than the first subcarrier spacing is used in the second cell, configures candidate values for guard time units applied to switching transmission and reception on the first radio link configured via the first cell and the second radio link configured via the second cell to be the same as when the first subcarrier spacing is used.

### [Brief Description of Drawings]

[FIG. 1]

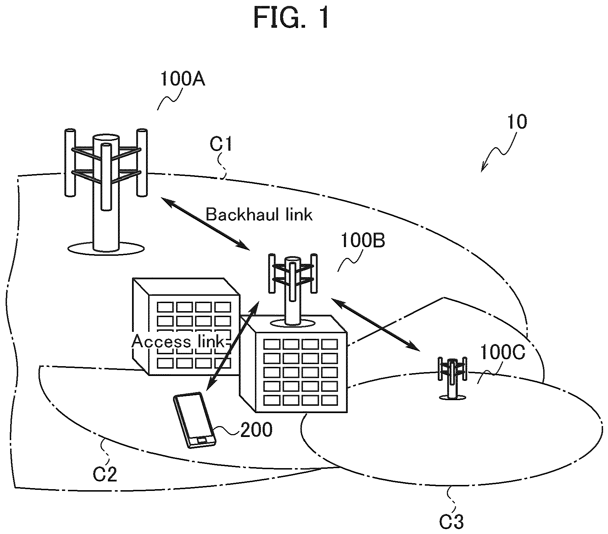

   FIG. 1 is an overall schematic configuration diagram of radio communication system 10.
[FIG. 2]

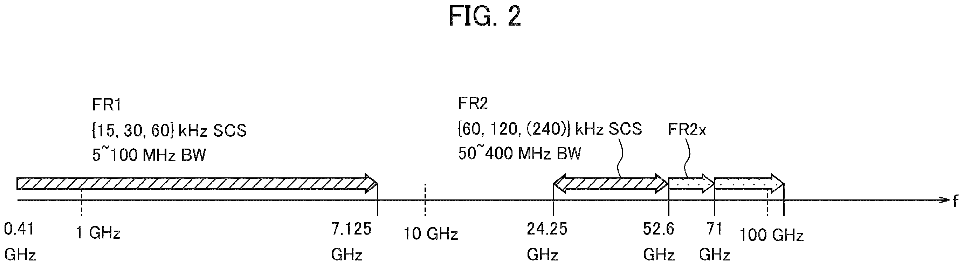

   FIG. 2 is a diagram illustrating a frequency range used in radio communication system 10.
[FIG. 3]

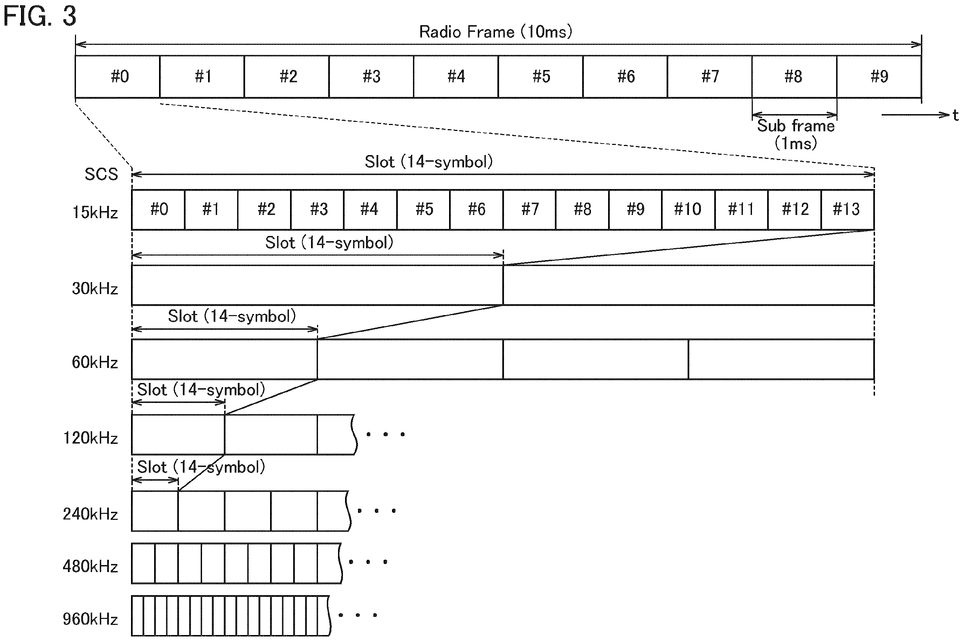

   FIG. 3 is a diagram showing a configuration example of a radio frame, a sub-frame and a slot used in radio communication system 10.
[FIG. 4]

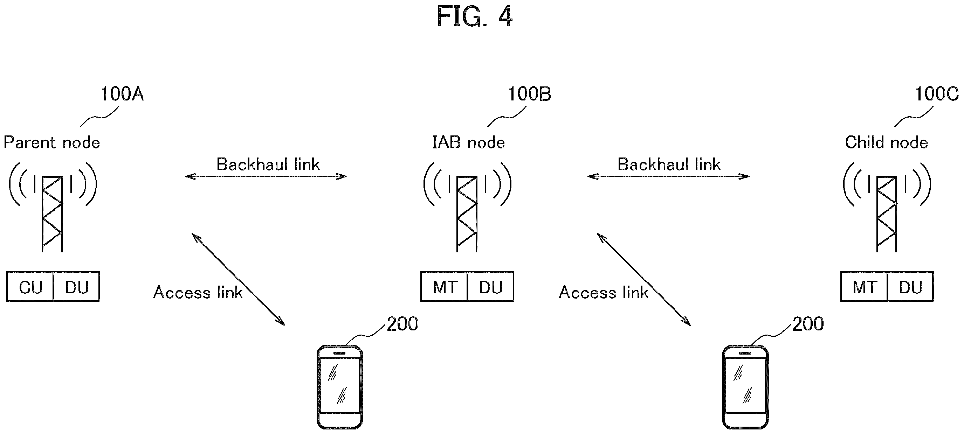

   FIG. 4 is a diagram showing a basic configuration example of the IAB.
[FIG. 5]

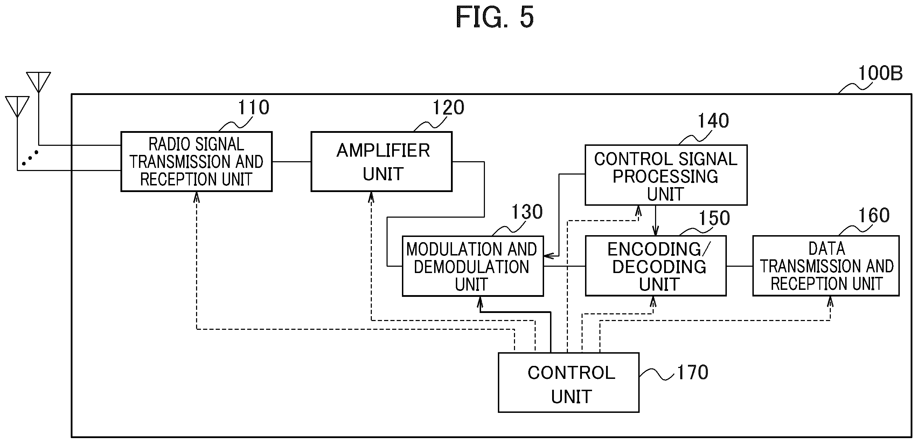

   FIG. 5 is a functional block diagram of the radio communication node 100 B (IAB node).
[FIG. 6]

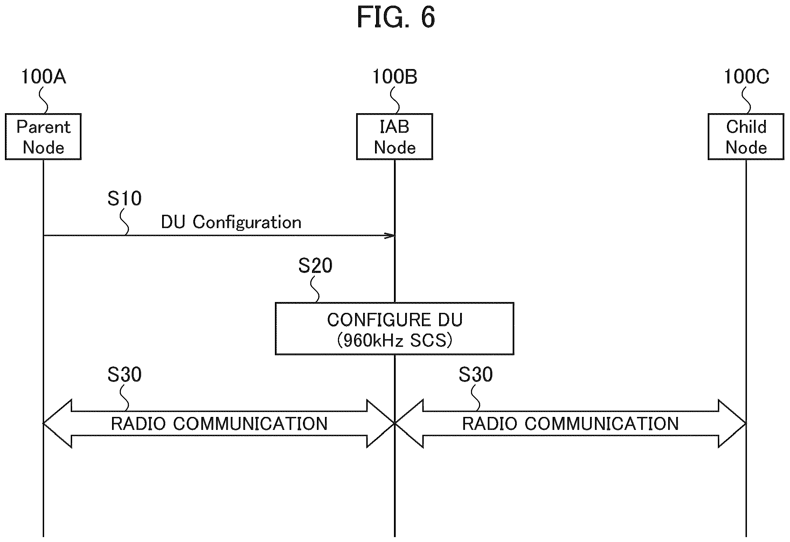

   FIG. 6 is a diagram showing an example of a communication sequence related to the configuration of an IAB-DU including an SCS.
[FIG. 7]

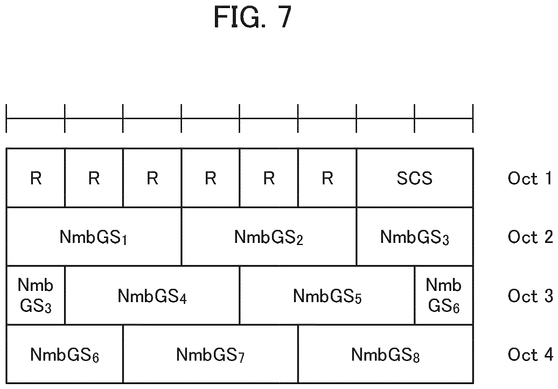

   FIG. 7 is a diagram showing a configuration example of the MAC-CE showing the number of guard symbols.
[FIG. 8]

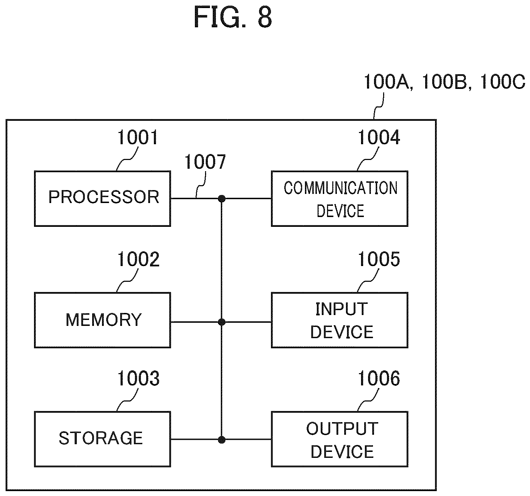

   FIG. 8 is a diagram showing an example of a hardware configuration of the radio communication nodes 100 A to 100 C.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

FIG. 1 is an overall schematic configuration diagram of a radio communication system 10 according to this embodiment. The radio communication system 10 is a radio communication system in accordance with 5G New Radio (NR) and comprises a plurality of radio communication nodes and terminals. The radio communication system 10 may be a radio communication system that follows a scheme called Beyond 5G, 5G Evolution or 6 G.

Specifically, radio communication system 10 includes radio communication nodes 100 A, 100 B, 100 C, and terminal 200 (UE 200, User Equipment).

The radio communication nodes 100 A, 100 B and 100 C can form cells C1, C2 and C3, respectively. The radio communication nodes 100 A, 100 B, 100 C can configure a radio access (access link) with the UE 200 and a radio backhaul (backhaul link) between the radio communication nodes via the cell. Specifically, a radio link backhaul (transmission path) may be configured between the radio communication node 100 A and the radio communication node 100 B, and between the radio communication node 100 B and the radio communication node 100 C.

Thus, a configuration in which radio access with the UE 200 and a radio backhaul between the radio communication nodes are integrated is called Integrated Access and Backhaul (IAB).

The IAB reuses existing functions and interfaces defined for radio access. In particular, Mobile-Termination (MT), gNB-DU (Distributed Unit), gNB-CU (Central Unit), User Plane Function (UPF), Access and Mobility Management Function (AMF) and Session Management Function (SMF) and corresponding interfaces such as NR Uu (between MT and gNB/DU), F1, NG, X2 and N4 may be used as baselines.

The radio communication node 100 A is connected to a NR radio access network (NG-RAN) and a core network (Next Generation Core (NGC) or 5 GC) via a wired transmission line such as a fiber transport. NG-RAN and NGC may be included and simply referred to as "network".

FIG. 2 shows the frequency range used in radio communication system 10. As shown in FIG. 2, radio communication system 10 corresponds to FR1 and FR2. The frequency bands of each FR are as follows.
▪FR 1: 410 MHz to 7.125 GHz
▪FR 2: 24.25 GHz to 52.6 GHz

In FR 1, 15, 30 or 60 kHz Sub-Carrier Spacing (SCS) may be used and a 5 ~ 100 MHz bandwidth (BW) may be used. FR 2 is a higher frequency than FR 1, and an SCS of 60 or 120 kHz (240 kHz may be included) may be used, and a bandwidth (BW) of 50 ~ 400 MHz may be used.

The SCS may be interpreted as numerology. Numerology is defined in 3 GPP TS 38.300 and corresponds to one subcarrier spacing in the frequency domain.

Furthermore, radio communication system 10 also supports a higher frequency band than the frequency band of the FR 2. Specifically, radio communication system 10 supports the frequency band from 52.6 GHz up to 71 GHz. Such a high frequency band may be referred to as "FR2x" for convenience.

To solve this problem, when using a band above 52.6 GHz, cyclic prefix-orthogonal frequency division multiplexing (CP-OFDM)/discrete Fourier transform-spread (DFT-S-OFDM) with larger sub-carrier spacing (SCS) may be applied.

In a high frequency band such as FR2x, as described above, an increase in phase noise between carriers becomes a problem. This may require the application of a larger (wider) SCS or a single carrier waveform.

The larger the SCS, the shorter the symbol/CP (cyclic prefix) and slot periods (if the 14 symbol/slot configuration is maintained). FIG. 3 shows a configuration example of a radio frame, a sub-frame and a slot used in radio communication system 10. Table 1 shows the relationship between the SCS and the symbol period.

**[Table 1]**

| SCS | 15 kHz | 30 kHz | 60 kHz | 120 kHz | 240 kHz | 480 kHz | 960 kHz |
|---|---|---|---|---|---|---|---|
| Symbol Period | 66.6 | 33.3 | 16.65 | 8.325 | 4.1625 | 2.08125 | 1.040625 |
| (Unit: µs) | | | | | | | |

As shown in Table 1, if the 14 symbol/slot configuration is maintained, the larger (wider) the SCS, the shorter the symbol period (and slot period). The symbol period may be referred to as a symbol length, a time direction or a time region.

FIG. 4 is a diagram showing a basic configuration example of the IAB. As shown in FIG. 4, in this embodiment, radio communication node 100 A may constitute an IAB donor in IAB, and radio communication node 100 B (and radio communication node 100 C) may constitute an IAB node in IAB.

The IAB donor may be referred to as an upper node in relation to the IAB node. In addition, the IAB donor may be referred to as a parent node. Also, the IAB donor may have a CU, and the parent node may be used simply as a name in relation to the IAB node (or child node) and may not have a CU. The IAB node may be referred to as a subordinate node in relation to the IAB donor (parent node).

A backhaul link is established between the IAB donor and the IAB node. Specifically, a radio link called Link_parent may be configured. A radio link (Backhaul link) is configured between the IAB node and the child node. Specifically, a radio link called Link_child may be configured.

The link_parent may consist of a DL Parent BH in the downward direction and a UL Parent BH in the upward direction. Link_child may comprise DL Child BH in the downward direction and UL Child BH in the upward direction.

The IAB node has a mobile termination (MT) which is a function for connecting with the IAB donor and a distributed unit (DU) which is a function for connecting with a child node (or UE 200). The child node also has an MT and a DU. The IAB donor has a Central Unit (CU) and a DU.

In terms of radio resources used by the DU, downlink (DL), uplink (UL) and flexible time-resource (D/U/F) are classified into any type of hard, soft or not available (H/S/NA). In Soft (S), available or not available is also defined.

Flexible time-resource (F) is a radio resource (time resource and/or frequency resource) that can be used for either DL or UL. "Hard " is a radio resource whose corresponding time resource is always available for a DU child link connected to a child node or UE, and" Soft " is a radio resource (DU resource) whose availability of the corresponding time resource for a DU child link is explicitly or implicitly controlled by an IAB donor (or parent node).

In addition, if it is Soft (S), the radio resource to be notified can be determined based on IA or INA.

IA means that the DU resource is explicitly or implicitly indicated as available. Also, "INA" means that the DU resource is explicitly or implicitly indicated as unavailable.

In this embodiment, the radio access and the radio backhaul may be half-duplex or full-duplex. Time division multiplexing (TDM), space division multiplexing (SDM) and frequency division multiplexing (FDM) are available as multiplexing methods.

When an IAB node operates in half-duplex communication, DL Parent BH is on the receiving (RX) side, UL Parent BH is on the transmitting (TX) side, DL Child BH is on the transmitting (TX) side, and UL Child BH is on the receiving (RX) side. In the case of the time division duplex (TDD), the configuration pattern of DL/UL in the IAB node is not limited to DL-F-UL only, and only the radio backhaul (BH), a configuration pattern such as UL-F-DL may be applied. In this embodiment, SDM/FDM is used to realize simultaneous operation of DU and MT of the IAB node.

In the present embodiment, in addition to the frequency band allocated to radio communication system 10 (for mobile communication), an unlicensed frequency band different from this frequency band is used in radio communication system 10. Concretely, in radio communication system 10, New Radio-Unlicensed (NR-U) is practicable which expands available frequency bands by using a spectrum of unlicensed (unlicensed) frequency bands. NR-U may be interpreted as a type of Licensed-Assisted Access (LAA).

The frequency band allocated for radio communication system 10 is included in the frequency range of the FR 1 and FR 2 described above and is based on the license allocation by the administration.

An unlicensed frequency band is a frequency band that does not require an administrative license assignment and can be used by any particular carrier. For example, a frequency band (2.4 GHz, 5 GHz, 60 GHz, etc.) for a wireless LAN (WLAN) can be mentioned.

In the unlicensed frequency band, it is possible to install a radio station not limited to a specific carrier, but it is not desirable that signals from neighboring radio stations interfere with each other and greatly deteriorate communication performance.

Therefore, for example, as a requirement for a radio system that uses an unlicensed frequency band (For example, in the 5 GHz band), a mechanism of Listen-Before-Talk (LBT) that allows transmission within a predetermined time period may be applied only when gNB, in the present embodiment, the radio communication nodes 100 A, 100 B, and 100 C execute carrier sense (sensing) before transmission is started and it is confirmed that the channel is not being used by other systems in the vicinity. Carrier sense is a technique for confirming whether a frequency carrier is used for other communications before transmitting a radio wave.

### (2)Function block configuration of radio communication system

Next, the functional block configuration of radio communication system 10 will be described. Specifically, the functional block configurations of the radio communication nodes 100 A, 100 B, and 100 C constituting the IAB node will be described.

Next, the functional block configuration of radio communication system 10 will be described. Specifically, the functional block configurations of the radio communication nodes 100 A, 100 B, and 100 C constituting the IAB node will be described.

FIG. 5 is a functional block diagram of the radio communication node 100 B (IAB node). The radio communication node 100 A differs from the radio communication node 100 B that functions as an IAB node in that it functions as an IAB donor (parent node). The radio communication node 100 C is different from the radio communication node 100 B in that it functions as a child node. Hereinafter, the case of the radio communication node 100 B will be described as an example.

As shown in FIG. 5, the radio communication node 100 B includes a radio signal transmission and reception unit 110, an amplifier unit 120, a modulation and demodulation unit 130, a control signal processing unit 140, an encoding/decoding unit 150, and a control unit 170.

Note that FIG. 5 shows only the main functional blocks associated with the description of the embodiment, and the radio communication node 100 B has other functional blocks (For example, the power supply section, etc.). FIG. 5 shows a functional block configuration of the radio communication node 100 B, and refer to FIG. 8 for a hardware configuration.

The radio signal transmission and reception unit 110 transmits and receives radio signals in accordance with NR. By controlling radio (RF) signals transmitted from multiple antenna elements, the radio signal transmission and reception unit 110 can support Massive MIMO for generating more directional beams, Carrier Aggregation (CA) for bundling multiple component carriers (CCs), and Dual Connectivity (DC) for simultaneously communicating between the UE and each of the two NG-RAN Nodes.

In this embodiment, the radio signal transmission and reception unit 110 can transmit/receive a radio signal to/from the radio communication node 100 A (upper node) via the cell C1 (first cell). Further, the radio signal transmission and reception unit 110 can transmit/receive a radio signal to/from the radio communication node 100 C or the UE 200 (lower node) via the cell C2 (second cell). In this embodiment, the radio signal transmission and reception unit 110 constitutes transmission/reception unit.

The amplifier unit 120 is composed of a PA (Power Amplifier)/LNA (Low Noise Amplifier) and the like. The amplifier unit 120 amplifies the signal output from the modulation and demodulation unit 130 to a predetermined power level. The amplifier unit 120 also amplifies the RF signal output from the radio signal transmission and reception unit 110.

The modulation and demodulation unit 130 performs data modulation/demodulation, transmission power setting, resource block allocation and the like for each specific communication destination (Radio communication node 100 A, 100 B or UE 200).

The control signal processing unit 140 executes processing related to various control signals transmitted and received by the radio communication node 100 B. Specifically, the control signal processing unit 140 receives various control signals transmitted from the radio communication node 100 A (or radio communication node 100 C) and the UE 200 via the control channel, for example, a control signal of the radio resource control layer (RRC). The control signal processing unit 140 transmits various control signals to the radio communication node 100 A or the UE 200 via the control channel.

Further, the control signal processing unit 140 can execute processing using a reference signal (RS) such as a demodulation reference signal (DMRS) and a phase tracking reference signal (PTRS).

The DMRS is a reference signal (pilot signal) known between a base station and a terminal of each terminal for estimating a fading channel used for data demodulation. The PTRS is a reference signal for each terminal for the purpose of estimating phase noise which becomes a problem in a high frequency band.

In addition to the DMRS and PTRS, the reference signal may include a Channel State Information-Reference Signal (CSI-RS), a Sounding Reference Signal (SRS), and a Positioning Reference Signal (PRS) for position information.

The channel includes a control channel and a data channel. The control channels include PDCCH (Physical Downlink Control Channel), PUCCH (Physical Uplink Control Channel), PRACH (Physical Random Access Channel), PBCH (Physical Broadcast Channel), and the like.

The data channels include PDSCH (Physical Downlink Shared Channel) and PUSCH (Physical Uplink Shared Channel). The signals may include channel and reference signals.

Furthermore, for NR-U, a channel may mean a carrier or a portion of a carrier consisting of a set of contiguous resource blocks (RBs) on which channel access procedures are performed in a shared spectrum.

The channel access procedure (see 3 GPP TS 37.213) may be interpreted as a sensing-based procedure to assess the availability of the channel for transmission. The basic unit for sensing may also be defined as a sensing slot having a predetermined time.

During the sensing slot period, the radio communication node 100 B (or other radio communication node, hereinafter referred to as) or UE 200 detects a channel and is considered idle if the detected power is at least below the energy detection (ED) threshold; otherwise, the sensing slot period may be considered busy.

Channel occupancy may also mean transmission over the channel by gNB (which may be eNB)/UE (including by MT/DU of the IAB) after executing the corresponding channel access procedure.

The "channel occupancy time (COT) " may mean the total time that the gNB/UE sharing the channel occupancy and any gNB/UE perform transmission on the channel after the gNB/UE performs the corresponding channel access procedure. The channel occupancy time may be shared for transmission between the gNB and the corresponding UE.

The DL transmit burst may be defined as a set of transmissions from the gNB. A DL transmission burst having a gap greater than a predetermined transmission gap may be considered a separate DL transmission burst.

An uplink (UL) transmit burst may be defined as a set of transmissions from a UE. A UL transmit burst having a gap greater than a predetermined transmit gap may be considered a separate UL transmit burst.

A discovery burst may be defined as a DL transmission burst containing a set of signals or channels contained within a predetermined window and associated with a duty cycle. One of the following transmissions initiated by the gNB may be designated as the discovery burst.
▪Primary Sync Signal (PSS)
▪Secondary Sync Signal (SSS)
▪Downlink Physical Broadcast Channel (PBCH)
▪CORESET (control resource sets) for PDCCH to schedule PDSCH
▪PDSCH carrying SIB1 and/or non-zero power CSI-RS

The encoding/decoding unit 150 performs data division/connection, channel coding/decoding, and the like for each predetermined communication destination (radio communication node 100 A or UE 200).

Specifically, the encoding/decoding unit 150 divides the data output from the data transmission and reception unit 160 into predetermined sizes, and executes channel coding on the divided data. The encoding/decoding unit 150 decodes the data output from modulation and demodulation unit 130 and connects the decoded data.

The data transmission and reception unit 160 sends and receives protocol data units (PDU) and service data units (SDU). Specifically, the data transmission and reception unit 160 performs assembly/disassembly of PDUs/SDUs in a plurality of layers (Media access control layer (MAC), radio link control layer (RLC), and packet data convergence protocol layer (PDCP), etc.).

The control unit 170 controls each function block constituting the radio communication node 100 B. In particular, in this embodiment, the control unit 170 performs controls to support IAB. In addition, the control unit 170 can perform control corresponding to a wide SCS such as 960 kHz. Note that the control unit 170 may also perform controls to support NR-U.

In particular, in the present embodiment, when a wide SCS such as 960 kHz is used, the control unit 170 executes control concerning a guard time unit applied to switching between transmission and reception between the MT (IAB-MT) of the IAB node and the DU (IAB-DU) of the IAB node.

Specifically, in the case where an SCS wider than, for example, an SCS of 120 kHz or 240 kHz (first subcarrier spacing) is used in the cell C2 (second cell) formed by the IAB-DU, for example, an SCS of 960 kHz (second subcarrier spacing), the control unit 170 may configure at least one of a minimum value or a maximum value (Specifically, NmbGS₁ to NmbGS₈, as described below.) of a candidate value that can be designated as a guard time unit applied to switching between transmission and reception at a Backhaul link (first radio link) configured via the cell C1 (first cell) formed by the DU of the IAB donor and an Access link or Access link (second radio link) configured via the cell C2 to be larger than a SCS of 120 kHz or 240 kHz (first subcarrier spacing).

Also, the control unit 170 may have the guard time unit larger (more) when a 960 kHz SCS is used than when a 120 kHz or 240 kHz SCS is used, regardless of the minimum or maximum value.

The guard time unit may be interpreted as a time specified in consideration of the operations inside the IAB node necessary for switching transmission and reception between the IAB-MT and the IAB-DU. The guard time unit may be a direct numerical value such as µs, or it may preferably be indicated by the number of symbols (or slots). In this case, it may be referred to as a guard symbol.

Chapter 3 GPP TS 38.321 5.18.19 specifies guard symbols for IAB as shown in Table 1.

**[Table 2]**

| **Switching scenario** | | **Field for number of guard symbols in MAC CE** |
|---|---|---|
| IAB-MT operation to IAB-DU operation | MT Rx to DU Tx | NmbGS₁ |
| | MT Rx to DU Rx | NmbGS₂ |
| | MT Tx to DU Tx | NmbGS₃ |
| | MT Tx to DU Rx | NmbGS₄ |
| IAB-DU operation to IAB-MT operation | DU Rx to MT Tx | NmbGS₅ |
| | DU Rx to MT Rx | NmbGS₆ |
| | DU Tx to MT Tx | NmbGS₇ |
| | DU Tx to MT Rx | NmbGS₈ |

As shown in Table 1, the number of guard symbols (NmbGS₁ to NmbGS₈) applied at the time of switching from the IAB-MT operation to the IAB-DU operation and at the time of switching from the IAB-DU operation to the IAB-MT operation is specified.

Based on these NmbGS₁ to NmbGS₈ configurations, control unit 170 may assume that when a 960 kHz SCS (second subcarrier spacing) is used in cell C2 (second cell), the size of the control element (CE) of the medium access control layer (MAC), which indicates the number of guard symbols, is expanded in the guard time unit.

MAC-CE, which indicates the number of guard symbols, is specified in Section 3 GPP TS 38.321 6.1.3.22. Although the configuration example of the MAC-CE (see FIG. 7) will be described later, it may be assumed that the number of bits representing NmbGS₁ to NmbGS₈ is increased in control unit 170. In this case, the reserved bits included in the MAC-CE may be used. Alternatively, a MAC-CE having a new configuration different from the MAC-CE may be defined.

Alternatively, even in the case where a 960 kHz SCS (second subcarrier spacing) is used in the cell C2 (second cell), the control unit 170 may configure the candidate value of the guard time unit (guard symbol) applied to switching between transmission and reception via the Backhaul link (first radio link) configured via the cell C1 (first cell) and the Backhaul link or Access link (second radio link) configured via the cell C2 to the same value as the case where a 120 kHz or 240 kHz SCS (first subcarrier spacing) is used.

This operation may be applied when the SCS of 960 kHz is used, but the guard symbol value, specifically, the value for the SCS of 960 kHz is not configured as the guardSymbol-SCS specified in Chapter 14 of 3 GPP TS 38.213. That is, the SCS may be extended to 960 kHz, but not necessarily to guard Symbol-SCS. Such an operation may be applied even in the case of an SCS of 960 kHz when the number of guard symbols required is not affected.

For example, in the control unit 170, all of the number of bits indicative of NmbGS₁ through NmbGS₈ may be the same as in a 120 kHz or 240 kHz SCS, or a portion of the number of bits indicative of NmbGS₁ through NmbGS₈ may be the same as in a 120 kHz or 240 kHz SCS.

### (3)Operation of radio communication system

Next, the operation of radio communication system 10 will be described. Specifically, an operation related to configuration the guard time unit (guard symbol) in the IAB node will be described.

### (3.1) Assumptions

As described above, when NR-U is applied in the frequency band of 52.6 ~ 71 GHz, a wide SCS such as 960 kHz has advantages such as efficient coexistence by providing a channel bandwidth (about 2 GHz) equivalent to that of IEEE 802.11 ad/ay, and reduction of PTRS overhead.

On the other hand, it is desirable that the number of SCSs supported for the 52.6 ~ 71 GHz frequency band be minimized in consideration of implementation and the like.

For example, when NR-U is applied in the 52.6 ~ 71 GHz frequency band, it is contemplated that a numerology (For example, a 960 kHz SCS) to support one 2 GHz bandwidth and another numerology (For example, a 120 kHz SCS) based on a simple extension of FR2 may be sufficient, while other numerologies may not be supported.

If the simple extension of FR2 (For example, a 120 kHz SCS) is applied to the 52.6 ~ 71 GHz frequency band, the specifications of 3 GPP Release - 15/16 are considered to be largely reusable. However, it is clear that the application of 960 kHz SCS requires special treatment that is different from 3 GPP Release - 15/16.

If a 960 kHz SCS is applied, the time (length) of the symbols and slots will be reduced, so it is expected that the IAB will also have various timing-related effects. In particular, guard symbols indicating the number of symbols that cannot be used at the time of switching between transmission and reception between the IAB-MT and the IAB-DU are preferably expanded when a 960 kHz SCS is applied.

### (3.2) Example of operation

An operation example of an IAB to which a 960 kHz SCS is applied will be described below. First, a 960 kHz SCS is added to the IAB-DU configurations.

Specifically, 960 kHz may be added to the Subcarrier Spacing as specified in Section 3 GPP TS 38.331 6.3.2 as follows:.
▪SubcarrierSpacing ::= ENUMERATED {kHz 15, kHz 30, kHz 60, kHz 120, kHz 240, spare 3, spare 2, spare 1}

Specifically, any one of spare3, spare2 and spare1 may be changed to 960 kHz. The 960 kHz SCS may also be applied to the DU, MT and UE.

The guard symbol for the IAB may be changed as follows. Specifically, the range of guard-Symbols Provided values specified in Section 14 of 3 GPP TS 38.213 may be extended to allow more symbols to be displayed. In this case, the size of the MAC-CE indicating the number of guard symbols may also be increased. guard-SymbolsProvided may indicate the number of symbols that the IAB node does not use when transitioning between IAB-MT and IAB-DU.

Alternatively, an SCS smaller than 960 kHz may be used to indicate the number of symbols, even if 960 kHz is not added to the guardSymbol-SCS, also defined in 3 GPP TS 38.213, Chapter 14, and the SCS is operated at 960 kHz. guardSymbol-SCS may indicate the configuration of the SCS for the symbol (guard symbol).

FIG. 6 shows an example of a communication sequence for configuration an IAB-DU including an SCS. As shown in FIG. 6, the radio communication node 100 A constituting the IAB donor (parent node) notifies the radio communication node 100 B constituting the IAB node of the IAB-DU configuration information (DU configuration) (S 10). DU configuration notification may be implemented by F1-AP (application protocol) signaling as specified in 3 GPP TS 38.473, etc., and/or by MAC-CE (Guard Symbols MAC CE) indicating the number of guard symbols applied to the IAB donor. The MAC-CE may also be used from the IAB node to the child node (radio communication node 100 C) to indicate the number of guard symbols applied to the IAB node.

The IAB node (radio communication node 100 B) configures the IAB-DU based on the configuration information of the IAB-DU (S 20). Specifically, the IAB node configures an SCS (960 kHz) applied to the IAB-DU (and the IAB-MT), a guard symbol applied when switching between the IAB-MT and the IAB-DU, and the like.

The IAB donor (radio communication node 100 A), the IAB node (radio communication node 100 B), and the child node (radio communication node 100 C) start radio communication when the configuration of MT and DU is completed (S 30). Specifically, radio communication is started via a Backhaul link between the DU of the IAB donor and the IAB-MT, and a Backhaul link between the IAB-DU and the MT of the child node.

FIG. 7 shows a configuration example of the MAC-CE showing the number of guard symbols. Specifically, the MAC-CE shown in FIG. 7 represents the configuration of the Guard Symbols MAC CE as defined in Section 3 GPP TS 38.321 6.1.3.22.

For NmbGS₁ through NmbGS₈, although 3 bits are allocated respectively, a value of 0 ~ 4 is actually used, and a value of 5 ~ 7 is spare. Thus, NmbGS₁ through NmbGS₈ may be represented by any of the following:.
(Alt.1): Extends to 7 (using reserved code points)
(Alt.2): The number of guard symbols is expanded to 7 or more by roughening the granularity (For example, 3 bits may be used to correspond to the guard symbol numbers 0, 1, 2, 4, 6, 8, ....).
(Alt.3) - Extend the size of the Guard Symbols MAC CE to a value range greater than 7.

If the size of the Guard Symbols MAC CE is extended (or reserved bits may be used), the SCS value of the Guard Symbols

| **Subcarrier spacing** | **SCS value** |
|---|---|
| 15kHz | 000 |
| 30kHz | 001 |
| 60kHz | 010 |
| 120kHz | 011 |
| ... | |
| 960kHz | 110 |

MAC CE may be extended to 3 bits or the like to support an SCS such as 960 kHz, as shown in Table 2.

### [Table 3]

### (4)Operational effects

According to the embodiment described above, the following effects are obtained. Specifically, when an SCS wider than, for example, an SCS of 120 kHz or 240 kHz (first subcarrier spacing), for example, an SCS of 960 kHz (second subcarrier spacing) is used in a cell C2 (second cell) formed by an IAB-DU, the radio communication node 100 B (IAB node) can configure at least either a minimum value or a maximum value of candidate values that can be designated as a backhaul link (first radio link) configured via a cell C1 (first cell) formed by a DU of an IAB donor and a guard time unit (guard symbol) applied to switching between transmission and reception via an access link or an access link (second radio link) configured via a cell C2 to be larger than when an SCS of 120 kHz or 240 kHz (first subcarrier spacing) is used.

Therefore, even when a wide SCS such as 960 kHz is supported in a high frequency band such as 52.6 ~ 71 GHz and the symbol length (slot length) becomes short, a guard symbol of an appropriate length can be configured. That is, according to radio communication system 10, even when a wide SCS such as 960 kHz is supported in a high frequency band such as 52.6 ~ 71 GHz, a more appropriate IAB operation can be realized.

In this embodiment, the radio communication node 100 B may assume that when a 960 kHz SCS (second subcarrier spacing) is used in the cell C2 (second cell), that is, in the IAB-DU, the size of the guard time unit, specifically the Guard Symbols MAC CE indicating the number of guard symbols, is expanded. Thus, even when a wide SCS is applied and the number of guard symbols increases, the number of required guard symbols can be notified to an IAB node or a child node.

In the present embodiment, even when an SCS (second subcarrier spacing) of 960 kHz is used in the cell C2 (second cell), the radio communication node 100 B may configure the candidate value of the guard time unit applied to switching between transmission and reception at the Backhaul link (first radio link) configured via the cell C1 (first cell) and the Backhaul link or Access link (second radio link) configured via the cell C2 to be the same as the case where an SCS (first subcarrier spacing) of 120 kHz or 240 kHz is used. Therefore, even in the case of a 960 kHz SCS, when there is no influence on the required number of guard symbols, efficient notification can be realized using a MAC-CE having a configuration similar to that of a 120 kHz or 240 kHz SCS.

### (5)Other Embodiments

Although the embodiment has been described above, it is obvious to those skilled in the art that various modifications and improvements are possible without being limited to the description of the embodiment.

For example, although the above embodiment described an example in which an SCS of 960 kHz is applied in FR2x, an SCS wider than that applied in FR1 or FR2, for example, an SCS of 480 kHz may be applied in FR2x.

In the above-described embodiment, the names of the parent node, the IAB node, and the child node are used, but the names may be different as long as a configuration of a radio communication node in which a radio backhaul between radio communication nodes such as gNB and radio access with a terminal are integrated is adopted. For example, it may be simply referred to as a first node, a second node, or the like, or it may be referred to as an upper node, a lower node, a relay node, an intermediate node, or the like.

Further, the radio communication node may be referred to simply as a communication device or communication node, or may be read as a radio base station.

The unlicensed frequency bands may also be referred to by different names. For example, the terms License-exempt or Licensed-Assisted Access (LAA) may be used.

The block configuration diagram (FIG. 5) used in the description of the above-described embodiment shows blocks in units of functions. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions the transmission is called a transmission unit (transmitting unit) or a transmitter. As described above, there is no particular limitation on the method of implementation.

Further, the above-described radio communication nodes 100 A to 100 C (the apparatus) may function as a computer that performs processing of the radio communication method of the present disclosure. FIG. 8 is a diagram showing an example of a hardware configuration of the apparatus. As shown in FIG. 8, the device may be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see FIG. 5) is implemented by any hardware element or combination of hardware elements of the computer device.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 operates, for example, an operating system to control the entire computer. Processor 1001 may comprise a central processing unit (CPU) including interfaces to peripheral devices, controllers, arithmetic units, registers, and the like.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, or the like. The memory 1002 may store programs (program codes), software modules, and the like that are capable of executing the method according to one embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Devices such as the processor 1001 and the memory 1002 are connected by a bus 1007 for communicating information. The bus 1007 may be configured using a single bus or may be configured using different buses for each device.

In addition, the device may comprise hardware such as a microprocessor, a digital signal processor (DSP), an application specific integrated circuit (ASIC), a programmable logic device (PLD), a field programmable gate array (FPGA), and the hardware may implement some or all of each functional block. For example, the processor 1001 may be implemented by using at least one of these hardware.

Further, the notification of the information is not limited to the mode/embodiment described in the present disclosure, and other methods may be used. For example, notification of information may be performed by physical layer signaling (e.g., Downlink Control Information (DCI), Uplink Control Information (UCI), higher layer signaling (e.g., RRC signaling, Medium Access Control (MAC) signaling, broadcast information (Master Information Block (MIB), System Information Block (SIB)), other signals, or a combination thereof. The RRC signaling may also be referred to as an RRC message, for example, an RRC Connection Setup message, an RRC Connection Reconfiguration message, and the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a nextgeneration system that is expanded based on these. Further, a plurality of systems may be combined (for example, a combination of at least one of the LTE and the LTE-A with the 5G) .

The processing procedures, sequences, flowcharts, and the like of each aspect/embodiment described in the present disclosure may be changed in order as long as there is no contradiction. For example, the methods described in this disclosure use an exemplary sequence to present the elements of the various steps and are not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the aspects/embodiments described in the present disclosure may be used alone, in combination, or switched over in accordance with implementation. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channel and the symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, planes, etc.), an unmanned mobile body (Drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal). For example, each aspect/embodiment of the present disclosure may be applied to a configuration in which communication between a base station and a mobile station is replaced with communication between a plurality of mobile stations (For example, it may be called Device-to-Device (D2D), Vehicle-to-Everything (V2X), etc.). In this case, the mobile station may have the function of the base station. In addition, words such as "up " and" down " may be replaced with words corresponding to communication between terminals (For example, "side".). For example, terms an uplink channel, a downlink channel, or the like may be read as a side channel.

Similarly, the mobile station in the present disclosure may be read as a base station. In this case, the base station may have the function of the mobile station. A radio frame may be composed of one or more frames in the time domain. Each frame or frames in the time domain may be referred to as a subframe. A subframe may be further configured by one or more slots in the time domain. The subframe may be a fixed time length (For example, 1 ms) independent of the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in time units greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the sub-frame and TTI may be a subframe (1 ms) in the existing LTE, a period shorter than 1 ms (For example, 1 -13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (minislot number) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" or" decision " may include regarding some action as "judgment " or" decision ". Moreover, "judgment (decision)" may be read as "assuming", "expecting", "considering", and the like.

In the present disclosure, the term "A and B are different" may mean "A and B are different from each other".

It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
100 A, 100 B, 100 C radio communication nodes
110 radio signal transmission and reception unit
120 amplifier unit
130 modulation and demodulation unit
140 control signal processing unit
150 encoding/decoding unit
160 data transmission and reception unit
170 control unit
200 UE
C1, C2, and C3 cells
1001 processor
1002 memory
1003 storage
1004 communication device
1005 input device
1006 output device
1007 bus

## Claims

1. A radio communication node comprising:
a transmission/reception unit that transmits and receives a radio signal to and from an upper node via a first cell and transmits and receives a radio signal to and from a lower node via a second cell; and
a control unit that makes at least one of a minimum value or a maximum value of a candidate value that can be designated as a guard time unit applied to switching between transmission and reception in a first radio link configured via the first cell and a second radio link configured via the second cell larger than in a case that the first subcarrier spacing is used, when a second subcarrier spacing wider than the first subcarrier spacing is used in the second cell.

2. The radio communication node of claim 1, wherein the control unit assumes that when the second subcarrier spacing is used in the second cell, the size of the control element of the medium access control layer indicating the guard time unit is expanded.

3. A radio communication node comprising:
a transmission/reception unit that transmits and receives a radio signal to and from an upper node via a first cell and transmits and receives a radio signal to and from a lower node via a second cell; and
a control unit that, even when a second subcarrier spacing that is wider than the first subcarrier spacing is used in the second cell, configures candidate values for guard time units applied to switching transmission and reception on the first radio link configured via the first cell and the second radio link configured via the second cell to be the same as when the first subcarrier spacing is used.
